# EUROPEAN PATENT APPLICATION

(11) **EP 1 114 993 A2**
(43) Date of publication of application: **11.07.2001**
(21) Application number: 01660002.5
(22) Date of filing: 05.01.2001
(51) Int. Cl.: G01N 21/89

(54) **Method and arrangement for inspection of surfaces**

(30) Priority: 07.01.2000 FI 20000032
(71) Applicant: Thermo Radiometrie Oy, 90570 Oulu (FI)
(72) Inventor: Keränen, Heimo, 90240 Oulu (FI); Karppinen, Martti, 90650 Oulu (FI); Juntunen, Pekka, 90820 Kello (FI)
(74) Representative: Antila, Harri Jukka Tapani

(57) **Abstract**

The invention relates to a method and an arrangement implementing the method of inspecting the surface of an object (106), the method comprising providing a movement between the object and the arrangement for inspecting the surface of the object, the surface of the object being radiated with optical radiation. Said radiation is directed to different imaging fields (108, 110) of the surface of the object so that at least one property of each radiation is different in the different imaging fields. For the creation of image information from the same surface area of the object at different radiations, an image is produced of the imaging fields and the image information of the same surface area obtained from different imaging fields is compared and/or combined to create surface inspection information.

## Description

### FIELD OF THE INVENTION

The invention relates to inspecting the quality of the surfaces of an object, such as the surfaces of rolled metal products, with an optoelectronic measuring arrangement.

### BACKGROUND OF THE INVENTION

EP 97114590.0-1524 teaches a prior art method and arrangement for inspection of the surface of a moving object. In the method and arrangement the surface of a moving object is illuminated with a first light source from a bright field illumination direction. A bright field illumination direction is the illumination direction according to the mirror angle of the surface. A second and a third light source are used to illuminate said surface from dark field illumination directions. A dark field illumination direction is other than the illumination direction according to the mirror angle of the surface. Said illuminations from the bright field and the dark field directions are spectrally different. Spectral difference means that the wavelength distributions of the illuminations are different, which in the range 400 nm to 700 nm of visual light means that the illuminations in different illumination directions have different colours. The illuminations are received to generate a signal from the illuminations of the surface from said illumination directions, each spectrally different illumination being received with a separate camera. Said signals are used to determine at least two of the following surface properties: reflectivity, glossiness, and 3D properties including surface roughness.

A drawback of the use of spectrally different light sources in the prior art solution disclosed in EP 97114590.0-1524 is that variations in the colour or another spectral surface property cause measuring error. Particularly in 3D measurement, which is essential in surface inspection, spectral difference may cause significant errors in measurement results. Errors due to spectral difference also cause incapability to adapt to changes in the surface material or a change of the same surface material into a different surface type, or both, and incapability to adjust to changes in illumination. Said incapability to adapt causes unnecessary alarms, which constitute a significant problem in productions processes, in particular.

DE 19511534 A1 relates to a method and arrangement for inspecting 3D properties of a moving surface by illuminating with light sources from at least two different directions, the lights from the sources having different colours. The illuminations from the different directions take place simultaneously, and an image is produced of the illuminated surface using a separate camera for each illumination direction. The analysis of the 3D properties of the surface is based on colour classification, with which the colour values obtained from the surface are compared.

The prior art solution in DE 19511534 A1 allows the 3D properties of a surface to be inspected, but it does not allow the glossiness or reflectivity to be inspected, since the method uses symmetric dark field illumination from two directions. Furthermore, the 3D analysis is based on colour classification, and colour errors impair the method, i.e. they cause incapability to adapt to changes in the surface material or a change of the same material into a different surface type, or both, or the incapability to adapt to changes in illumination. Said incapability to adapt causes unnecessary alarms, which constitute a significant problem in productions processes, in particular.

In other words, the prior art solution in DE 19511534 A1 has a very limited capability to distinguish between different surface error properties.

In a prior art solution in DE 19720308 C2, a dark field image is taken from the surface of a moving material, the surface area of which an image is to be produced being at a radiation source radiating from the dark field angle and at a corresponding matrix camera, and a bright field image is taken from a bright field angle, the corresponding area of which an image is to be produced being at the radiation source radiating from the bright field angle and at a corresponding camera. In the surface detection, surface errors are analyzed from either the dark field image or the bright field image depending on from which image the errors can be better analyzed. Said solution is not selective between 2D and 3D errors. Variations in the colour and pattern of the surface cause errors in the detection, since they cannot be well observed in said surface detection based on one image.

### BRIEF DESCRIPTION OF THE INVENTION

The object of the invention is thus to provide a method and an apparatus implementing the method so as to solve the above problems. This is achieved by a method of inspecting the surface of an object, the method comprising providing a movement between the object and the arrangement for inspecting the surface of the object, the surface of the object being radiated with optical radiation. The method further comprises directing said radiation to different imaging fields of the surface of the object so that at least one property of each radiation is different than in the other imaging fields, an image being produced of the imaging fields to create image information on the same surface area of the object at different radiations, and the image information on the same surface area in different imaging fields being compared and/or combined to create surface inspection information.

The invention also relates to an arrangement for inspecting the surface of an object, a movement being provided between the arrangement and the surface of the object. The arrangement comprises one or more radiation sources for radiating at least two different imaging fields, at least one property of the radiation being different in the different imaging fields, imaging field-specific image detectors in the imaging fields for creating image information on the same surface area of the object at different radiations, and means for comparing and/or combining the image information on the same surface area obtained from the different imaging fields to create surface area-specific inspection information.

The preferred embodiments of the invention are disclosed in the dependent claims.

The invention is based on radiating the surface of a moving object with optical radiation in different imaging fields on the surface, at least one property of the radiations in the different imaging fields being different. To create image information from the same area of the object at different radiations, an image is produced of the imaging fields. The image information on the same surface area obtained in different imaging fields is compared and/or combined to create surface inspection information.

An advantage of the invention is improved measurement accuracy.

The solution of the invention has no drawbacks caused by colour errors, and hence measurement accuracy is extremely good particularly in 3D measurements. Colour errors are not created since, in a preferred embodiment of the invention, the moving surface is radiated with spectrally identical optical radiations, i.e. in the wavelength range 400 nm to 700 nm of visible light with optical radiation of the same colour. This not only improves the reliability of inspecting the 3D properties of a surface, but also that of inspecting the glossiness and reflectivity of the surface. One of the signs of improved reliability is, for example, the avoidance of unnecessary alarms, which significantly accelerates the production process.

The solution of the invention preferably utilizes the ratios of optical radiations having different polarizations, typically the ratio between horizontally polarized and vertically polarized radiation, and thus allows the thickness and the refractive index of for example a membrane on the surface of the object and the thickness and the refractive index of the surface of the object to be measured at good measuring accuracy.

Finding minor surface errors requires the generation of a high radiation power for small surface areas to allow producing an image at short exposure time to adapt to high production line speeds. In 3D measurements it is also preferable to accurately control the incidence angles of radiations from different directions and the spectral similarity of the radiation. Said objects are achieved by using laser radiation sources in the solution of the invention.

A preferred embodiment of the invention uses laser radiation sources for radiating the surface of an object with spectrally similar radiation, allowing a better inspection of a moving surface from farther away than previously, such as the inspection of a moving hot surface. In this context, surface inspection from far away refers to surface inspection from the distance of one meter or farther, feasibly from up to three meters away. The invention also allows the inspection of the surface of a rapidly moving object. An essential advantage of the invention is that it allows the same arrangement to be used for reliable inspection of 3D properties and colour properties of a surface.

### BRIEF DESCRIPTION OF THE DRAWINGS

In the following the invention will be described in greater detail by means of preferred embodiments with reference to the attached drawings, in which
Figure 1 is a schematic block diagram of the arrangement of the invention,
Figure 2 shows a first preferred embodiment of the invention,
Figure 3 shows a second preferred embodiment of the invention,
Figure 4 shows a third preferred embodiment of the invention,
Figure 5 shows a fourth preferred embodiment of the invention.

### DETAILED DESCRIPTION OF THE INVENTION

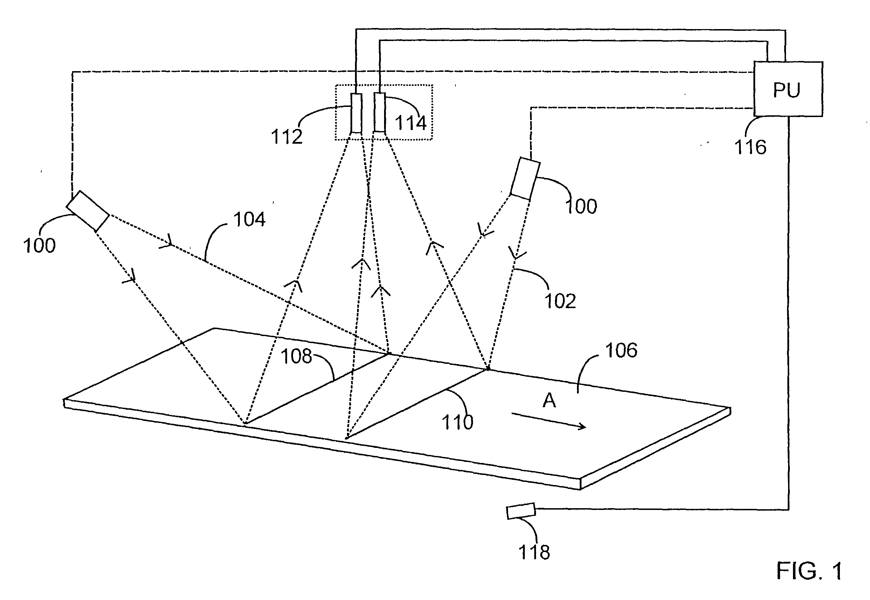

Figure 1 shows an arrangement of the invention for inspecting the surface of an object. The arrangement in Figure 1 comprises two radiation sources 100 in different radiation directions 102, 104, but the radiation sources may also be located in the same radiation direction in the solution of the invention. The solution of the invention may also comprise only one radiation source 100. At least one property of the radiations directed by the radiation sources at the surface is different. Typical different properties between surface radiations include divergence, wavelength range and polarisation.

A movement, denoted by arrow A, is provided between an object 106 and the arrangement for inspecting the surface of the object. In Figure 1 the object 106 is moving, but the solution of the invention also allows a stationary object and a moving arrangement. It is essential that a movement is provided between the object and the arrangement.

The radiation sources 100 use optical radiation to radiate different imaging fields 108, 100, typically equal in size, on the surface of the object 106. Naturally, at each image producing moment, the imaging field is the surface of the moving object 106. The solution of the invention also allows one radiation source 100 to radiate both imaging fields, which thus receive divergent radiations.

The radiation sources are typically laser radiation sources that continuously radiate the surface of the object. A laser radiation source is used to radiate an area of the width of a laser line. An area of the width of a laser line corresponds to at least the pixel width of an image detector. A radiation source may comprise more than one single radiation source. Typically, the entire width of the surface of an object is radiated. In other words, as the object moves, its entire surface is radiated and an image produced. The arrangement comprises imaging field-specific image detectors 112, 114 for each imaging field 108, 110 for producing an image of the imaging fields as the movement between the object and the arrangement propagates for creating image information on the same surface area of the object at different radiations. The image detectors typically produce an image of the surface across the width of their pixel, i.e. one pixel-long surface areas of the moving object 106 constitute imaging fields 108, 110. The radiation may be processed as desired between the radiation source and the imaging field to obtain the desired radiation in the imaging field. The imaging field-specific detector may be a pixel matrix of a CCD camera, a pixel matrix range of the pixel matrix of a CCD camera or an image detector formed on a silicon chip.

Referring still to the solution of the invention shown in Figure 1, typically the aim is to inspect the entire surface of the object, which allows image detectors 112, 114 to be timed to produce an image of the radiated imaging fields 108, 110 of the object 106 such that an image is produced of the entire surface of the object to create image information. With the speed of the object known in advance, said timing is not necessary, but the image detectors may be programmed in advance to the desired image producing speed. The arrangement may be synchronized such that the image detector 114 produces an image of the surface area of the object 106 in its imaging field 110 at the right moment, the image detector 112 previously having produced an image of said surface area when it was in the imaging field 108. The arrangement may also be implemented such that the detectors take images to create image information, which is used to obtain image information on the same surface area of the object based on movement information between the object and the arrangement and/or by correlation calculation. Means 116 comprising a processing unit 116 are typically used to determine the above timing and synchronization of the image detectors and the image information from the same surface area of the object. Other optional embodiments exist too; synchronization may be implemented in image detectors 112, 114, for example.

Control information is the basis for the comparison and/or combination of the image information on the same surface area. Control information is typically created based on the movement between the object 106 and the arrangement. Control information may also be created based on correlation calculation, image information obtained from different imaging fields 108, 110 being correlated, whereby the existence of sufficient correlation provides the image information on the same surface area of the object. Information on the movement between the object and the arrangement is not necessary in correlation calculation. Control information is typically used to control the movement-synchronized image information creation of the surface areas. Control information is used to find out image information on the same surface area of the object. The above measures related to control information are typically carried out with the means 116 comprising a processing unit 116. The processing unit is typically implemented as processor-based software, for example a computer or a processor, which uses suitable software to carry out the method steps of the invention. A movement sensor 118 measuring the movement of the object typically creates the movement information.

The image information on the same surface area of the object 106 is compared and/or combined to create inspection information on the surface of the object 106 in the means 116, typically a processing unit 116 or a separate computer. Inspection information is used in the processing unit 116 or a separate computer to determine e.g. 3D properties of the surface of the object, i.e. surface roughness and colour properties, glossiness and reflectivity.

In the preferred embodiments of the invention to be described next, the surface to be inspected is a band-like narrow surface or a sheet-like wide surface, such as surfaces of rolled metal products.

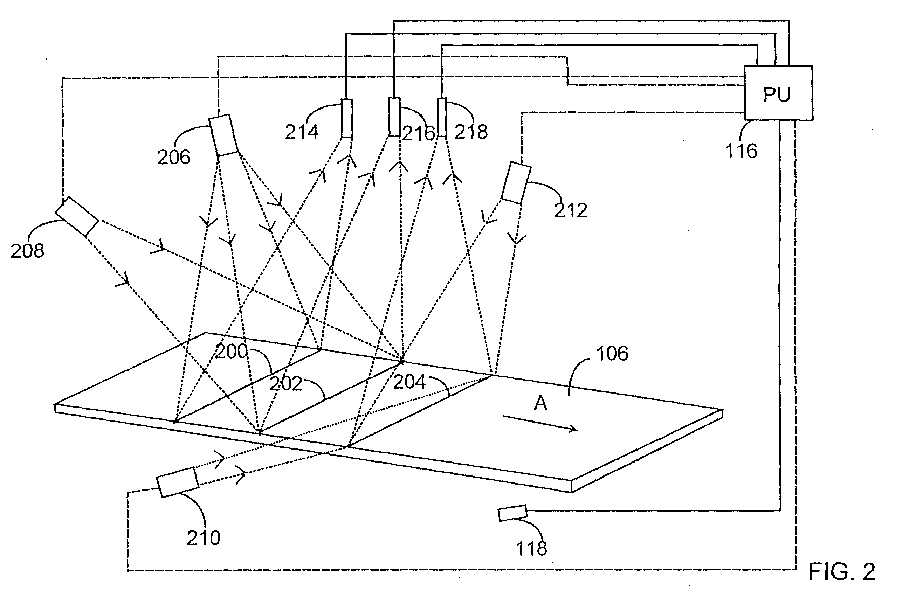

In a first preferred embodiment of the invention shown in Figure 2, imaging fields 200, 202, 204 on the surface of the object 106 are radiated with optical radiation such that at least two imaging fields have at least one common radiation. In Figure 2, a common radiation is provided for imaging fields 200, 202 with a radiation source 206. Furthermore, a radiation is provided for imaging field 202 with a radiation source 208. Radiation is provided for imaging field 204 with a first radiation source 210 and a second radiation source 212. An image is produced of each imaging field 200, 202, 204 to its specific detector 214, 216, 218 to create image information. The distance between the imaging fields is typically a multiple of the size of the pixel comprised by the detector. In the preferred embodiment of the invention, image information on the surface of the object is thus created at the accuracy of a pixel. The processing unit 116 uses the movement information measured with the movement sensor 118 to control the image detectors to produce an image of the surface of the object at the accuracy of a pixel. In other respects, the first preferred embodiment of the invention may be similar to the one described in Figure 1.

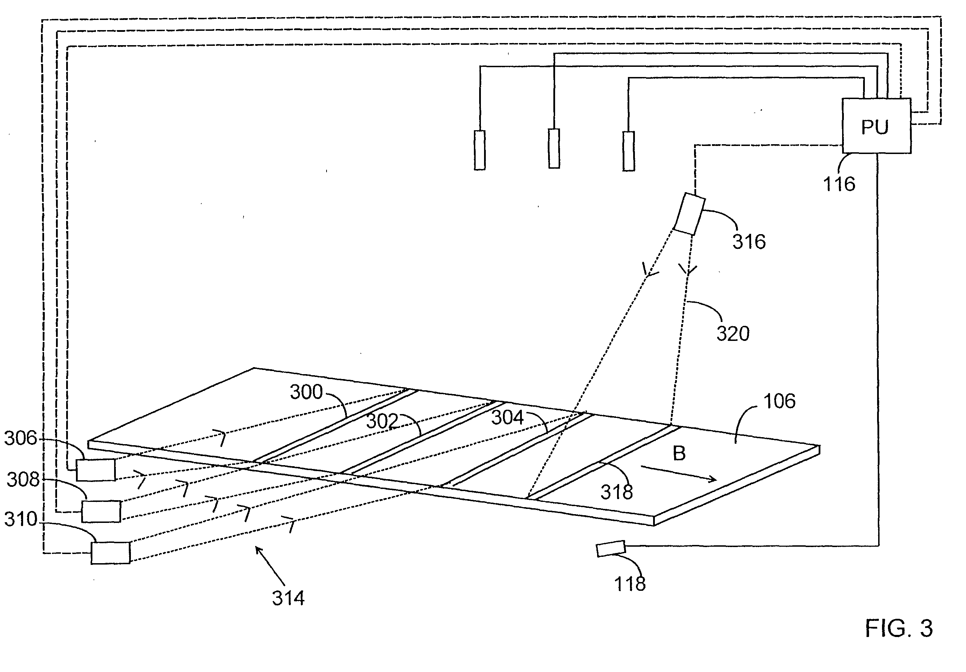

A second embodiment of the invention shown in Figure 3 allows the colour and 3D properties of the surface of the moving object 106 to be measured with the same measurement arrangement. Arrow B denotes the movement of the object. In colour measurement, the surface of the object is radiated with optical radiations of different colours and at different wavelengths using radiation sources 306, 308, 310 from the same radiation direction 314 to imaging fields 300, 302, 304. As the movement between the object 106 and the arrangement propagates, an image is produced of the imaging fields such that an image is produced of the entire surface of the object at every differently coloured radiation to create image information. Said image information is compared surface area-specifically for exact determination of the colour properties of the surface. The same arrangement also allows a 3D measurement to be carried out for example by radiating imaging fields 304, 318 with radiation sources 310, 316 whose radiation on the surface of the object is of the same colour, from two radiation directions 314, 320. In both above radiations, an image is produced of the imaging fields to create image information. In other respects, the second preferred embodiment of the invention may be similar to the one described in Figure 1.

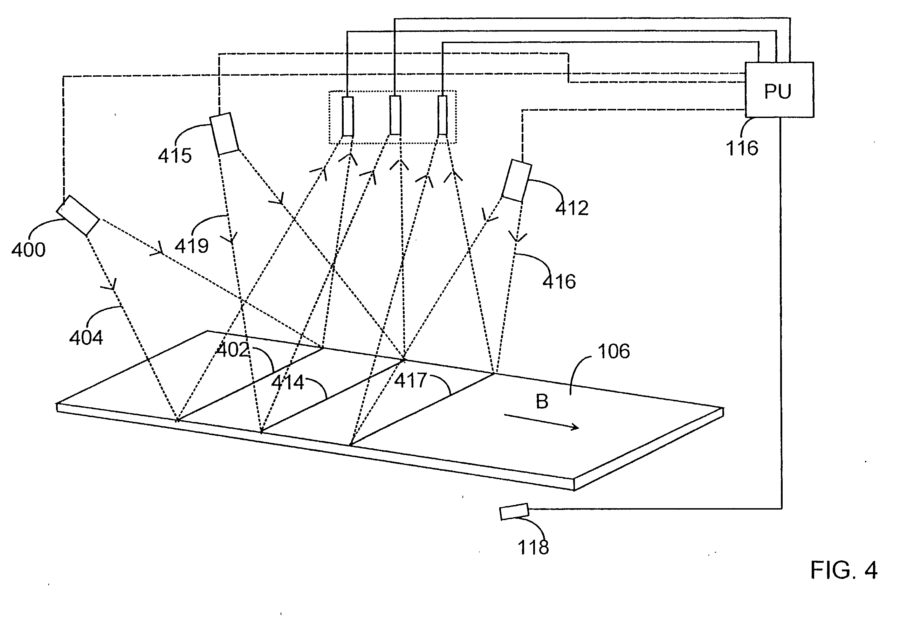

In a third preferred embodiment of the invention shown in Figure 4, the surface of the moving object 106 is inspected by radiating the surface with optical radiation from three different radiation directions. Arrow B denotes the movement of the object. A radiation source 400 radiates an imaging field 402 from a first dark field radiation direction 404. A radiation source 412 radiates an imaging field 414 from a second dark field radiation direction 416. A radiation source 415 further radiates an imaging field 417 from a bright field radiation direction 419. The radiation sources are typically laser radiation sources that allow radiation of narrow, linear areas, called laser line areas. Radiated laser line areas are on the surface of the object at the accuracy of a pixel of the image detector. In other respects, the third preferred embodiment of the invention may be similar to the one described in Figure 1.

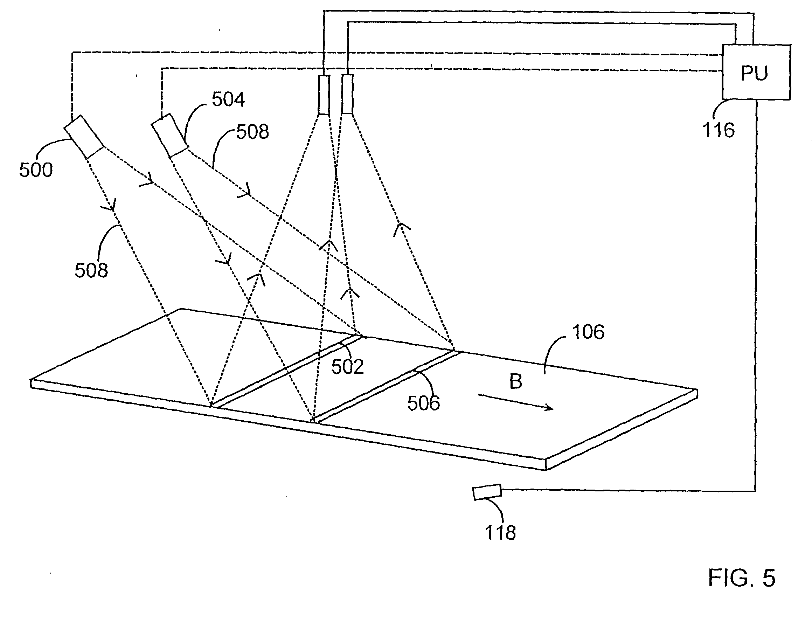

In a fourth preferred embodiment of the invention shown in Figure 5, the surface of the moving object 106 is inspected on at least two different polarization levels. Arrow B denotes the movement of the object. In said embodiment, at least two differently polarized optical radiations are used to radiate the surface of the object in different imaging fields. In a typical embodiment, a radiation source 500 is used to radiate an imaging field 502 of the object with vertically polarized optical radiation from a bright field radiation direction 508 and a radiation source 504 is used to radiate an imaging field 506 of the object with horizontally polarized optical radiation also from the bright field radiation direction 508. In other respects, the fourth preferred embodiment of the invention may be similar to the one described in Figure 1. The fourth embodiment utilizes the ratio of vertically polarized and horizontally polarized radiations, which is used to measure surface roughness, thickness and refractive index, for example. Typically, the thickness and refractive index of a membrane on a liquid substance, such as lacquer or oil, is measured.

Although the invention was described above with reference to the example according to the accompanying drawings, it is obvious that the invention is not restricted thereto, but can be modified in a variety of ways within the inventive idea disclosed in the attached claims.

## Claims

1. A method of inspecting the surface of an object (106), in which method a movement exists between the object and the arrangement for inspecting the surface of the object, the surface of the object being radiated with optical radiation, **characterized** by
directing said radiation to different imaging fields (108, 110) of the surface of the object so that at least one property of each radiation is different than in the other imaging fields;
an image being produced of the imaging fields to create image information on the same surface area of the object at different radiations; and
the image information on the same surface area in different imaging fields being compared and/or combined to create surface inspection information.

2. A method as claimed in claim 1, **characterized** by control information being the basis for the comparison and/or combination of the image information on the same surface area of the object (106).

3. A method as claimed in claim 2, **characterized** by the control information being typically created based on the movement between the object (106) and the arrangement.

4. A method as claimed in claim 2, **characterized** by the control information being created based on correlation calculation, image information obtained from different imaging fields (108, 110) being correlated, whereby the existence of sufficient correlation provides the image information on the same surface area of the object (106).

5. A method as claimed in claim 1, **characterized** by control information being used to control movement-synchronized creation of image information on the surface areas.

6. A method as claimed in claim 1, **characterized** by control information being used to find out image information on the same surface area of the object.

7. A method as claimed in claim 1, **characterized** by the radiations having different directions.

8. A method as claimed in claim 1, **characterized** by the radiations having different wavelength ranges.

9. A method as claimed in claim 1, **characterized** by the radiations having different polarizations.

10. A method as claimed in claim 1, **characterized** by the surface of the object (106) being radiated with laser radiation sources.

11. A method as claimed in claim 10, **characterized** by using a laser radiation source to radiate an area of the width of a laser line on the surface of the object (106).

12. A method as claimed in claim 11, **characterized** by the area of the width of a laser line corresponding to at least the pixel width of an image detector.

13. A method as claimed in claim 1, **characterized** by producing an image of the imaging fields with imaging field-specific image detectors (112, 114).

14. A method as claimed in claim 13, **characterized** by at least one imaging field-specific image detector being the pixel matrix of a CCD camera.

15. A method as claimed in claim 13, **characterized** by at least one imaging field-specific image detector being a pixel matrix area of the pixel matrix of a CCD camera.

16. A method as claimed in claim 13, **characterized** by at least one imaging field-specific image detector being an image detector formed on a silicon chip.

17. An arrangement for inspecting the surface of an object, a movement being provided between the arrangement and the surface of the object (108), **characterized** in that the arrangement comprises:
one or more radiation sources (100) for radiating at least two different imaging fields (108, 110), at least one property of the radiation being different in the different imaging fields;
imaging field-specific image detectors (112, 114) in the imaging fields (108, 110) for creating image information on the same surface area of the object at different radiations; and
means (116) for comparing and/or combining the image information on the same surface area obtained from the different imaging fields to create surface area-specific inspection information.

18. An arrangement as claimed in claim 17, **characterized** in that the arrangement comprises means (116) for obtaining image information on the same surface area of the object (106) for comparison and/or combination based on control information.

19. An arrangement as claimed in claim 18, **characterized** in that the arrangement comprises means (116) for creating control information based on the measurement of the movement between the object (106) and the arrangement.

20. An arrangement as claimed in claim 18, **characterized** in that the arrangement comprises means (116) for creating control information based on correlation calculation, wherein the image information obtained from different imaging fields is correlated, whereby the existence of sufficient correlation provides the image information on the same surface area of the object (106).

21. An arrangement as claimed in claim 17, **characterized** in that the arrangement comprises means (116) for using control information to control the creation of movement-synchronized image information on the surface areas.

22. An arrangement as claimed in claim 17, **characterized** in that the arrangement comprises means (116) for using control information to find out the image information on the same surface area of the object (106) among the image information.

23. An arrangement as claimed in claim 17, **characterized** in that the radiations have different directions.

24. An arrangement as claimed in claim 17, **characterized** in that the radiations have different wavelength ranges.

25. An arrangement as claimed in claim 17, **characterized** in that the radiations have different polarizations.

26. An arrangement as claimed in claim 17, **characterized** in that the one or more radiation sources (100) comprised by the arrangement is a laser radiation source.

27. An arrangement as claimed in claim 26, **characterized** in that the arrangement comprises a laser radiation source to radiate an area of the width of a laser line on the surface of the object (106).

28. An arrangement as claimed in claim 27, **characterized** in that the area of the width of a laser line corresponds to at least the pixel width of an image detector.

29. An arrangement as claimed in claim 17, **characterized** in that the arrangement comprises the pixel matrix of a CCD camera as one of the imaging field-specific image detectors.

30. An arrangement as claimed in claim 29, **characterized** in that the arrangement comprises a pixel matrix area of the pixel matrix of a CCD camera as one of the imaging field-specific image detectors.

31. An arrangement as claimed in claim 17, **characterized** in that the arrangement comprises an image detector formed on a silicon chip as one of the imaging field-specific image detectors.
